# EUROPEAN PATENT SPECIFICATION

(11) **EP 2 604 501 B1**
(45) Date of publication and mention of the grant of the patent: **18.02.2015**
(21) Application number: 11193848.6
(22) Date of filing: 15.12.2011
(51) Int. Cl.: B63B 21/50, F03D 11/04, F03D 1/00, B63B 21/56, B63B 43/06

(54) **System of anchoring and mooring of floating wind turbine towers and corresponding methods for towing and erecting thereof**
System und Verankerung und Anlagen von schwimmenden Windturbinentürmen und entsprechende Verfahren zum Anlegen und Ausstellen davon
Système d'ancrage et d'amarrage de tours d'éolienne flottantes et procédés correspondants pour le remorquage et l'érection de celles-ci

(43) Date of publication of application: 19.06.2013
(73) Proprietor: Graf, Andreas, 2542 Pieterlen (CH)
(72) Inventor: Graf, Andreas, 2542 Pieterlen (CH)
(74) Representative: BOVARD AG

(56) References cited:
- WO-A1-02/052150
- FR-A1- 2 907 419

## Description

### Technical Field

The present invention relates to an off-shore windfarming structure based on floating and weight-stabilized wind turbine towers with compartments and aerodynamic overwater profile, moored by ropes, a net of horizontally floating underwater cables and vertical lines anchored on the seabed, altogether forming a windpark, and the methods to erect these structures. The system is suitable to carry down- or upwind operating wind turbines typically comprising nacelles, horizontal axles and radially mounted blades as well as to serve as guiding structure for electrical transmission cables from the wind turbine towers to the collector stations of the windpark.

### Background of the invention

Worldwide energy consumption is increasing steadily and rapidly. The international community strives, therefore, to introduce and expedite non-fossil and non-nuclear energy production in order to slow down climatically critical CO₂ emissions and to avoid risks and consequential costs of nuclear energy. Solar energy, hydro and wind power as well as gas and ethanol made from biomass present valuable alternatives in combination with efforts to increase the efficiency of powered or fueled devices and to slow down the increase of energy consumption.

Due to large areas worldwide exposed to strong and steady seasonal or all-the-year winds, the potentials of wind power are enormous. The efficiency of wind turbines with two or three blades and horizontal axles is high and can hardly be improved due to the laws of physics. However, larger turbines are being planned: whereas the most productive turbines of today have the capacity to generate up to 5 Megawatts, turbines of 10 or more Megawatts are expected to be installed in some years from now.

There exist both large on-shore and off-shore windparks. In both cases the towers, on top of which nacelles and blades are mounted, are positioned on piles anchored on the seabed or the ground of a lake. Alternatively, towers can be mounted on platforms held in place by a structure on the lake ground or seabed (hereinafter, the term "seabed" stands for both "the ground of a lake" or "(the) seabed")

Various systems of floating or semisubmersible structures as bases of off-shore wind turbines are being developed and tested. For this purpose the technology of fixedly anchored off-shore and land-based wind turbines has been adapted. Transmission of electrical power under water is only feasible with direct current.

FR 2 907 419 A1 discloses such a system comprising a network of floaters which are mutually fastened by flexible connections, each connection being provided with at least one submerged weight and enabling the floaters of the network to be maintained in defined positions, interspaced by the deviations. At least two peripheral nodes of the network are fixed to the marine bed by anchors.

The installation of windparks on the open sea has the following advantages compared to near-shore and land-based windparks: immense marine areas suitable for windfarming off the shores of major consumer nations (often with important agglomerations close to the shore) are still not exploited for windfarming, winds unimpaired by topography, trees or buildings, unperceivable noise emission, virtual invisibility for coast dwellers and negligible impact on birdlife (since routes of migratory birds rarely lead across oceans) and underwater fauna (if not with a positive impact by making fishing with nets inefficient or impossible).

The disadvantages of off-shore windparks (regardless of whether the towers are fixedly anchored in the seabed or whether they are freely floating [though not drifting] or whether they are semisubmersible) are the necessity to operate with high voltage direct current (HVDC) transmission over very long distances until power can be converted onshore into alternative current to be fed into the grid, the exposure of wind turbines and their supporting structures to aggressive saliferous air and spindrift as well as the fact that shipping or towing of modules or entire off-shore wind power units including their platforms to the energy production sites and the assembly and/or erection of existing systems is complicated and cost-intensive. Mono-piles of wind turbine towers fixedly anchored are exposed to enormous leverage forces at or near the seabed. Both fixedly anchored and semisubmersible wind turbine towers are exposed to the forces of breaking waves, whereas floating wind turbines are still exposed to up- and downward motions. Especially floating and - to a lesser extent - semisubmersible wind towers tend to wobble when towers incline under wind load because of the changing angular momentum. This leads to a disturbed running of mechanics, increasing material fatigue, in particular of the bearings of the nacelle freely rotating around its own axis.

### Summary of the invention

In view of the above, an object of the present invention is to provide a system of structures to carry floating off-shore wind turbines (operating in up- or downwind position) and to make the transport of these wind turbine towers and of the turbines to the energy production sites and the erection and maintenance of towers on site more efficient and, therefore, less expensive than existing systems.

According to the present invention, these and other objectives are achieved in particular through the features of the independent claims. In addition, further advantageous embodiments follow from the dependent claims and the description.

Furthermore, the system according to the present invention does not require the nacelle to be mounted on bearings on top of the tower. Instead, the entire tower (including the turbine and the submerged stabilizing shaft) can align itself and the turbine according to the wind direction since the tower is being placed in a slide ring (typically based on polymers) near the water surface and since the overwater cross-section of the tower is aerodynamically encased.

The aerodynamic encasement of the tower above the water level serves as wind vane and reduces also the wind load impacting on wind turbine towers and helps, subsequently, to reduce the drift forces impacting on the entire windpark system. Additionally, the aerodynamic encasement helps to maintain the dynamic balance between forces caused by the angular momentum of the rotating turbines and the aerodynamic forces impacting on the encasement and, thereby, to avoid wobbling movements of the tower.

The submerged shaft of the tower stabilizes the wind turbine tower with the mounted turbine due its self-weight and the ballast enclosed in the lower end of the shaft. Typically, the submerged shaft above the bottom weight and the upper tower comprise several compartments separately connected to a pump (typically on-board of ships) to either pump gas (typically air) into the compartments or to pump water out of the flooded water- and airtight compartments (respectively tanks). Typically, if more than two compartments exist, the center compartment will float just below the water surface when in final energy production position, will be the one with the largest cubage and might be featuring a considerable larger diameter than the upper tower and the lower shaft. The facility for manipulating and controlling the specific weight of the wind turbine towers is on the one hand used to tow towers in a horizontal, floating position from and to the energy production sites. On the other hand, the towers can be erected and the nacelle mounted by flooding successively the bottom compartments on site until the top of the tower reaches the working position for the installation of nacelle and blades e.g. with the help of ship cranes. Alternatively, the nacelle, possibly with one blade, could be mounted already on-shore, lowered onto and fastened to a separate buoy or ship (whereas the tower and shaft would float horizontally without such support) and towed to the final energy production site. In case, the nacelle and blades are mounted on site, the tower can be lifted into the final position by pumping air into the upper compartment(s) after having installed the nacelle and blades on the working level. The floating wind turbine units are integrated to a windpark.

The mooring system of the windpark consists of weight anchors or other anchorage systems, vertical mooring lines, chains or cables to these anchors. Typically, the anchors are positioned in a triangular or quadrangular, regular pattern on the seabed. Semisubmersible buoys or tanks containing gas or foams (hereinafter called major buoys) to generate buoyant force maintain the mooring lines, chains or cables in an upright and taut position. Typically, the vertical mooring lines, chains or cables are either entirely coated or encased with corrosion-resistant and buoyancy generating, light materials or with separate buoys fixed in regular (typically short) distances to generate buoyancy and keep them in a floating under water position and, thereby, helping to reduce the physical strain caused by the self-weight of the mooring lines, chains or cables.

Anchors with connected mooring lines, chains or cables are lowered to the seabed together with the major buoys. The mooring lines, chains or cables are prepared or cut to length in order all major buoys float on the same depth under the water surface. Typically, the major buoys will be placed several meters below the floatation depths of very large ships in order the windparks do not constrain shipping traffic or reduce interference with the latter as much as possible.

Either together with the lowering of anchors, of mooring lines, chains or cables and of the major buoys or after successful positioning of anchors and major buoys, horizontal floating lines or typically cables are fixed to the majors buoys to form an immense triangular or quadrangular underwater floating meshwork, hereinafter called floating meshwork, with the major buoys serving as platform for the joints of the fishing-net-like, horizontally floating meshwork. As with the vertical mooring lines, cables or chains described above, the cables of the floating meshwork are typically either entirely coated or encased with corrosion-resistant and buoyancy generating, light materials or with separate buoys fixed in regular (typically short) distances to generate the buoyancy needed to avoid any vertical sagging of the meshwork cables, lines or chains and subsequent contracting of the entire floating mooring system of the wind park.

Finally, in the corner regions of the floating meshwork and in a certain distance from the major buoys the wind turbine towers are positioned, usually by tying the slide ring with three, typically equally long ropes to the floating meshwork, whereupon one joint would be on the major buoy and the two other connections would be on the cables of the floating meshwork. The wind turbine towers form hence the center of an actinomorphic buoy-cable-mooring. Typically, the angles between ropes would be 120° if no drift is interfering. One or several wind turbine towers are fixed next to each major buoy. Typically, the final distance between single wind turbine towers would be the same regardless of whether clusters of several wind turbine towers are arranged around major buoys or whether only one single wind turbine tower is fixed to a major buoy. The optimal distance between single wind turbine tower units depends on the size of the wind turbine and the all-season wind regime and would typically be several hundred meters.

The method should allow conventional onboard ship cranes, towboats, cable layer ships and/or heavy lift ships to be used, but, as may be the case, with certain modifications.

The described system of off-shore windparks is applicable particularly in waters deeper than 30 meters.

Electric surplus energy could be used to fill compressed underwater-air-stores of adiabatic systems. In times of power shortages compressed air can be released and be used to generate electricity again. Alternatively or additionally, electric surplus energy could be used on shore to produce H₂ gas through water electrolysis and followed by methanisation of CO₂ gas from coal- or gas-based thermic power plants. The methane gas could then be distributed using existing gas pipelines and stored using existing gas storage facilities. Alternatively or additionally, electric surplus energy could be used to pump water back up to reservoirs of hydroelectric power plants, to charge batteries or to fill other suitable energy storages. In case of lacking facilities to store or transmit electric surplus energy from windparks, wind power turbines can be shut down within short time - contrary to conventional thermic and nuclear power plants.

If designed for a sufficiently high mechanical load capacity, the floating meshwork can be used to moor other structures than wind turbine towers like e.g. floating fish farms or floating platforms for compressors, engines, turbines, generators, couplings, hoses, tubes and other structures and devices necessary to operate adiabatic systems. Furthermore, the horizontal mooring lines can serve as guiding lines along which electrical cables (typically with a relative density similar to water) can be fixed.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise. All reference to "a/an/the [element, device, component, part, methods etc.]" are to be interpreted openly as referring to at least one instance of said element, device, component, part, methods etc., unless explicitly stated otherwise. The steps of any method disclosed herein do not have to be performed in the exact order disclosed, unless explicitly stated.

### Brief description of the drawings

The above, as well as additional objects, features and advantages of the present invention will be better understood through the following illustrative and non-limiting detailed description of preferred embodiments of the present invention, with reference to the appended drawing, where the same reference numerals will be used for similar elements.
Fig. 1 is a schematic side view of the floating off-shore windpark system of the present invention, whereas
Fig 2 is the schematic bird's view of the same windpark system
Fig. 3 depicts a schematic side view of a single floating wind turbine tower installed in upright operational modus (position in which energy is produced).
Fig. 4 depicts a schematic perspective view onto a part of the floating meshwork with major buoys and the anchorage on the seabed, but without wind turbine towers.
Fig. 5 is the schematic cross-section view of the wind turbine tower above and next to the center compartment, which is below the water surface when in operational modus.
Fig. 6 depicts a schematic side view of a horizontally floating wind turbine tower ready for transport by towboats.
Fig. 7 depicts a schematic perspective view onto parts of the windpark with floating triangular meshwork, major buoys, vertical moorings, anchorage on the seabed and one mounted wind turbine unit per major buoy.

### Detailed description of preferred embodiments or embodiments or basic versions of embodiments

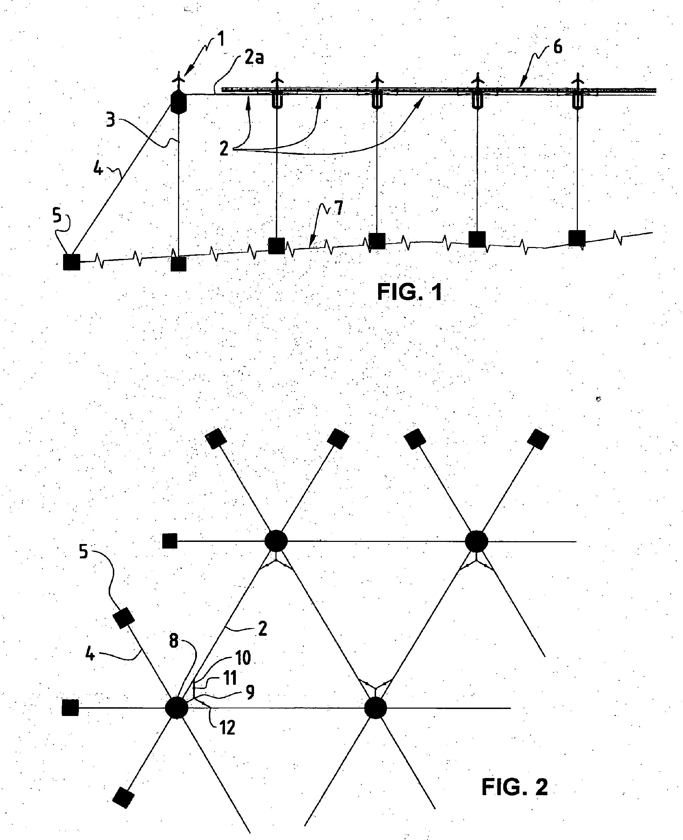

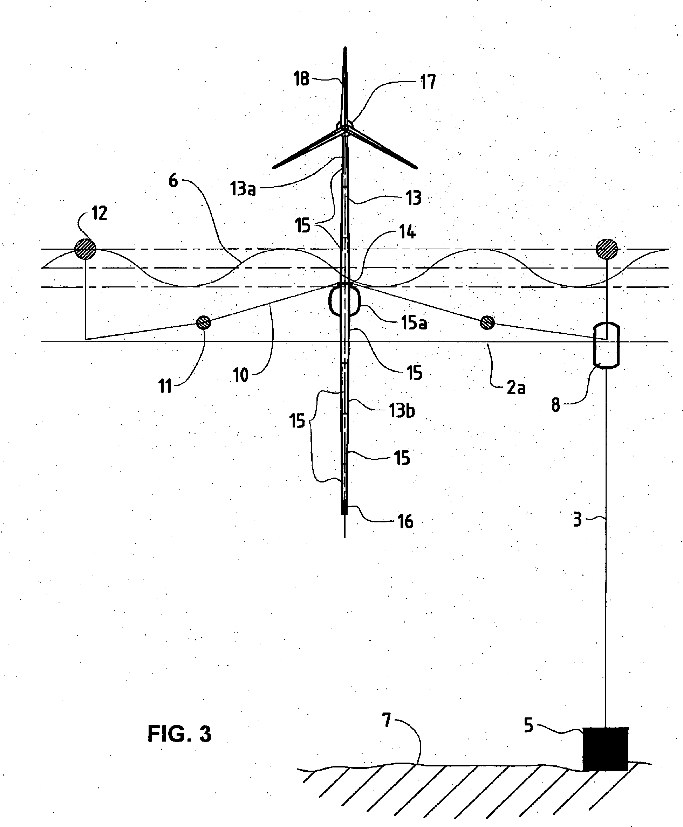

Fig. 1 is a schematic side view of the floating off-shore windpark system of the present invention. The reference number 1 is a floating wind turbine unit comprising a wind turbine tower 13 (cf. Fig. 3) moored to a semisubmersible major buoy 8 and the adjacent semisubmersible, horizontally floating cables, chains or lines 2a (in the following only called horizontal lines 2a) of the floating meshwork 2. The reference number 3 is a vertical mooring chain, cable or line (in the following only called vertical mooring lines 3) connected typically to a weight-anchor 5 on the seabed 7. At the edges of the windpark the major buoys 8 and with it the entire floating meshwork 2 would typically be transversely braced by border mooring lines 4 to achieve an optimal reduction of side drift of the windpark system. The reference number 6 depicts the water surface and maximal swell amplitude.

Fig. 2 is the schematic bird's view of the same windpark system. The reference number 9 is a singular wind turbine tower forming the center of an actinomorphic buoy-cable-mooring. The reference number 10 are the lines, cables or ropes (in the following called the ropes 10) to which the wind turbine towers 13 are tied to. Optionally, relatively light ropes 10 (contrary to e.g. steel cables or chains) could be tensed by mounting a weight 11 either freely sliding on or fixed approximately in the middle of the rope in order to avoid unwanted coiling of the ropes around the underwater parts of the wind turbine tower 13b (e.g. in case of jammed sliding rings 14). Optionally, at each joint where the ropes 10 are fixed to the floating meshwork 2, including the major buoys 8, signal buoys 12 floating on the water surface can be tied to clearly indicate the triangular range (around wind turbine towers) within which ships with considerable floatation depths may not circulate.

Typically, the mooring lines 2a, 3 and 4 are either entirely coated or encased with corrosion-resistant and buoyancy generating, light materials or with separate buoys fixed in regular (typically short) distances to generate buoyancy and help, thereby, to avoid the physical strain caused by the self-weight of the mooring lines 2a, 3 and 4 and to avoid vertical sagging and subsequent contracting of the entire horizontally mooring system of the floating meshwork 2. Mooring lines 3 and 4 encased or equipped with buoyancy generating materials can be dimensioned for smaller drag forces than as if these lines would not be self-floating.

Usually, anchors 5 with connected mooring lines 3 and 4 are lowered to the seabed together with the major buoys 8. The mooring lines 3 and 4 are cut to length in order all major buoys float in the same depth under the water surface. Typically, the major buoys will be placed several meters below the floatation depths of very large ships in order the windparks do not constrain shipping traffic or in order to reduce interference with the latter as much as possible.

Fig. 3 depicts a schematic side view of a single floating wind turbine tower 13 installed in upright operational modus and fixed within the floating meshwork 2. The wind turbine tower consists of an upper part 13a, reaching above the water surface 6, and a lower part 13b, hereinafter called tower shaft, which is submerged. Typically, the diameters of both the upper and lower part of the wind turbine tower will be conically reduced towards the upper respectively lower end for reasons of static optimization.

The wind turbine tower consists of one, but typically several compartments 15, whereupon the center compartment 15a will for stability reasons float just below the water surface (when in operational modus), will have an important cubage or will be the one with the largest cubage and might be featuring a considerable larger diameter than the upper tower 13a and the lower shaft 13b.

The ropes 10 are fixed to the slide ring 14 (typically based on polymers) near the water surface and usually to two horizontal lines 2a of the floating meshwork 2 and one major buoy 8. The reference number 16 is the stabilizing weight enclosed in or attached to the lower .end of the shaft 13b. The reference number 17 is the nacelle includirig generator and typically a gearbox. The reference number 18 is a turbine blade. A tower 13 advantageously comprises three blades 18, but any other number is of course possible. The plane of these turbine blades 18 is typically parallel to (or in line with) the plane of the shaft 13b, but it is also absolutely thinkable to have blades 18 being in a plane inclined with respect to the plane of the shaft 13b. It is furthermore possible to offer the possibility of a dynamic adjustment of the plane, e.g. by means of an electrically controlled motor.

The electrical cable leading to (respectively away from) the wind turbine tower 13 exits at the bottom tip of the shaft 13b and is not visually depicted on none of the Figures. To avoid coiling of electrical transmission cables due to the rotation of the wind turbine tower around its own axis with changing wind directions sophisticated conventional mechanical solutions are adopted.

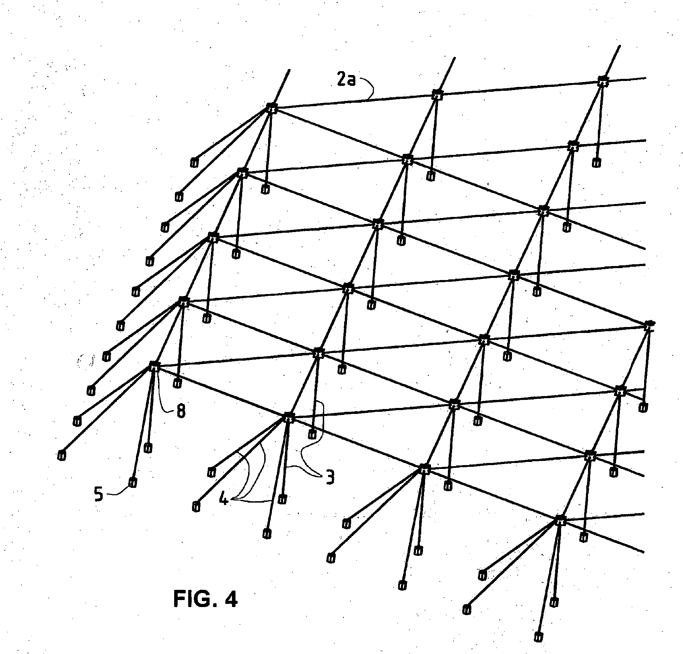

Fig. 4 depicts a schematic perspective view onto a part of the floating meshwork 2 with major buoys 8 and anchorage 5 on the seabed 7, but without wind turbine towers.

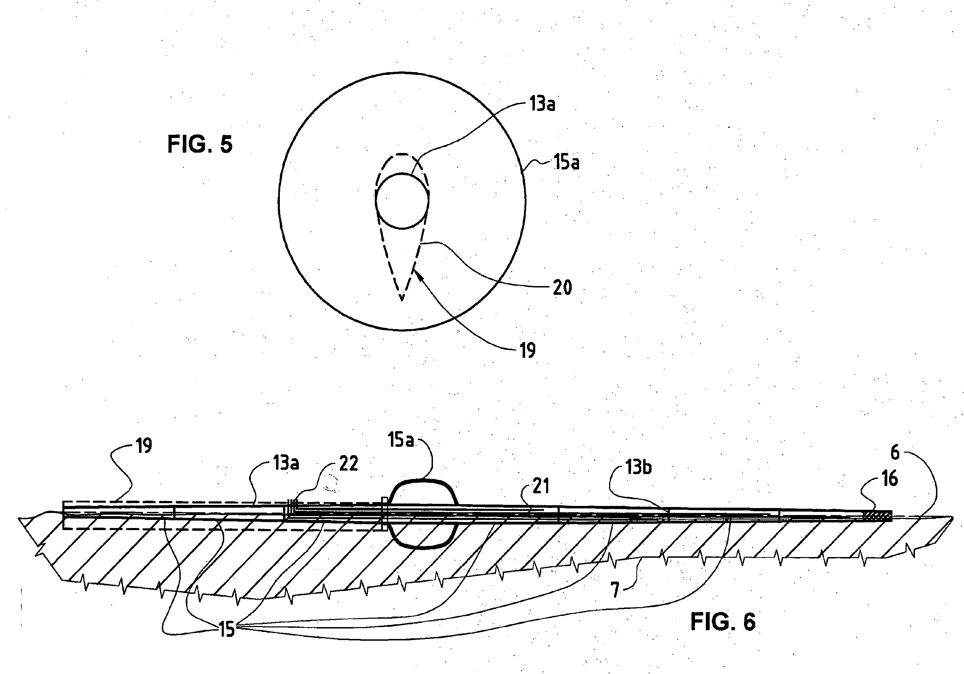

Fig. 5 is the schematic cross-section view of the upper part of the wind turbine tower 13a above and next to the center compartment 15a (if such is foreseen). The depicted cross-section would be close to the water surface 6 of a wind turbine tower 13 in operational modus.

The reference number 19 is the aerodynamic encasement of the wind turbine tower 13a exposed to the winds. The aerodynamic encasement 19 will either feature an invariable diameter or its diameter may be conically reduced from the bottom towards the top of the wind turbine tower 13a. The clear space between the encasement and the tower is not hermetically sealed. This is indicated by the dashed line symbolizing openings 20.

Fig. 6 depicts a schematic side view of a horizontally floating wind turbine tower 13 with compartments 15 not flooded, but vented and ready for transport by towboats. During towing the aerodynamic encasement 19 is flooded through the openings 20 and will serve as keel preventing the wind turbine tower 13 from rolling over its own axis. The reference number 21 is a water respectively air pipe system through which compartments 15 (including compartment 15a) both in the upper tower 13a and in the shaft 13b can be flooded and vented. Hoses mounted to pumps on ships can be connected to the connective valves 22 and air can be pumped to vent the compartments or water filled in order to flood the compartments 15 and press the air out. Typically, two pipes - one inlet and one outlet pipe - lead to each of the floodable compartments 15. If a multitude of compartments exist, the one or the ones next to the top end of the wind turbine tower 13a need not to be equipped for flooding and ventilation.

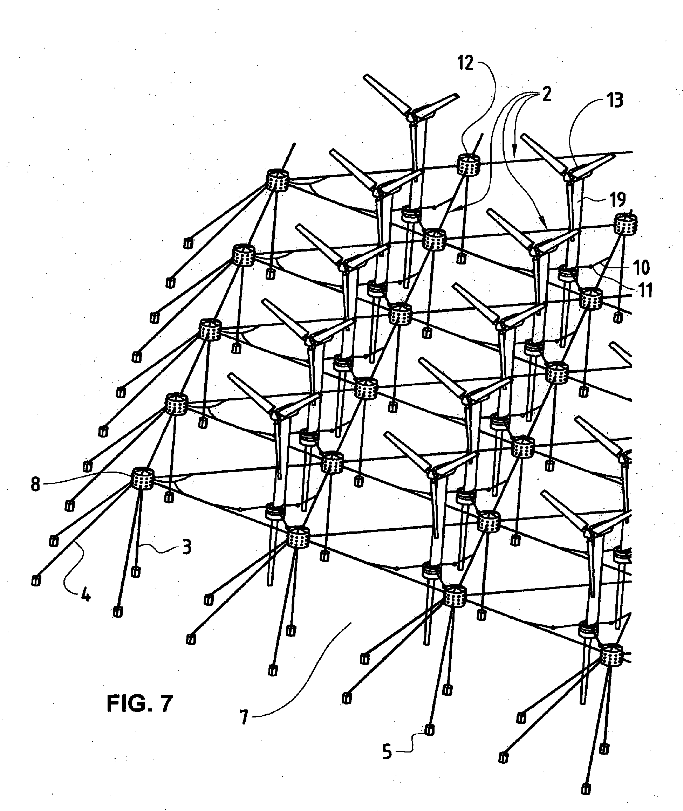

Finally, Fig. 7 depicts a schematic perspective view onto parts of the windpark with a floating triangular meshwork 2, major buoys 12, vertical mooring lines 3, border mooring lines 4, anchorage 5 on the seabed 7 and completely assembled wind turbine tower units 1 in operational modus, each of these units 1 tied to a major buoy 12 and adjacent horizontal lines 2a by ropes 10. Optionally and depending on the width of the meshes of the floating meshwork 2, the size of the wind turbine units 1 and the environmental conditions (wind regime, water depths, maximum swell amplitude, water currents, topography of seabed 7) more than one wind turbine tower unit 1 could be positioned around each mayor buoy 12 and the adjacent four (applicable for quadrangular floating meshwork 2) or six (applicable for triangular floating meshwork 2) horizontal lines 2a. In Fig. 7, wind turbine tower units 1 along the left border of the windpark are not or not yet mounted to major buoys 12 and the adjacent horizontal lines 2a.

Although the present disclosure has been described with reference to particular means, materials and embodiments, one skilled in the art can easily ascertain from the foregoing description the essential characteristics of the present disclosure, while various changes and modifications may be made to adapt the various uses and characteristics as set forth in the following claims. In particular, it is important to mention that any one of the components of the windpark can be exchanged by a similar component, fulfilling the same or a similar functionality. Furthermore, it is also possible to leave out one or more of the components of the windpark (e.g. one of the more components of the wind turbine tower 13), without jeopardizing the present invention.

## Claims

1. System of anchoring and mooring of floating wind turbine towers (13) in waters typically deeper than 30 meters, forming a windpark-structure, comprising anchors (5), vertical mooring lines (3), border mooring lines (4), major buoys (8) a floating meshwork (2), ropes (2) (optionally with weights (11) and, typically, signal buoys (12),
comprising each wind turbine tower (13) an upper part (13a) exposed to the winds, a submerged lower part or shaft (13b), and **characterized in that** each wind turbine tower comprises compartments (15), usually a center compartment (15a), a sliding ring (14), a stabilizing bottom weight (16), an aerodynamic encasement (19) with openings (20), a water-air-pipe system (21) and connective valves (22).

2. Method for erecting the wind turbine towers (13) according to claim 1, comprising
towing the wind turbine towers (13) with one single or several vented compartments (15) in horizontal position with towboats from on-shore construction and assembling sites to the off-shore sites of electricity production and.
erecting wind turbine towers (13) at the final destination by flooding successively the single compartment (15) or the compartments (15), in the latter case starting with the compartments next to the lower end respectively next to the stabilizing bottom weight (16) of the shaft (13a), until the upper part of the wind turbine tower (13a) reaches the working level from which the entire nacelle is mounted to the top end of the wind turbine tower (13a) and from which also the blades (18) are fixed.

3. Method according to claim 2, further comprising the following step: after having fully assembled the wind power station the single compartment is partially vented or one or several upper compartments (in case several compartments exist) are fully or partially vented (or the water contained in the compartment[s] is simply being released, if the water level in these compartments is above the surrounding level of the sea or lake) until the wind power station reaches its final operational position to produce electrical energy.

## Patentansprüche

1. System zum Verankern und Festmachen von schwimmenden Windturbinentürmen (13) in Gewässern mit einer Tiefe von typischerweise mehr als 30 Metern zur Ausbildung einer Windparkstruktur, das Anker (5), vertikale Festmacherleinen (3), Randfestmacherleinen (4), Hauptbojen (8), ein schwimmendes Maschenwerk (2), Seile (2) (optional mit Gewichten (11)) und typerscherweise Signalbojen (12) aufweist,
wobei jeder Windturbinenturm (13) einen dem Wind ausgesetzten oberen Bereich (13a) und einen unter Wasser befindlichen unteren Bereich oder Schaft (13b) aufweist, **dadurch gekennzeichnet, dass**
jeder Windtourbinenturm (13) Kammern (15), gewöhnlich eine Mittelkammer (15a), einen Gleitring (14), ein stabilisierendes Fussgewicht (16), eine aerodynamische Verkleidung (19) mit Öffnungen (20), ein Wasser-Luft-Leitungssystem (21) und Verbindungsventile (22) aufweist.

2. Verfahren zum Aufstellen der Windturbinentürme (13) nach Anspruch 1, das aufweist:
Schleppen der Windturbinentürme (13) mit einer einizgen oder mehreren luftgefüllten Kammern (15) in einer horizontalen Position durch einen Schlepper von Konstruktions- und Aufbauorten an Land zu den Orte der Elektrizitätsprodution auf See und
Aufstellen der Windturbinentürme (13) an ihrem endgültigen Standort durch sukzessives Fluten der einzelnen Kammer (15) oder Kammern (15), wobei im letztgenannten Fall mit der Kammer nahe des unteren Endes, bzw. nahe des stabilisierenden Fussgewichts (16) des Schafts (13a) begonnen wird, bis der obere Bereich des Windturbinenturms (13a) das Arbeitsniveau erreicht, auf dem die gesamte Maschineneinheit am oberen Ende des Windturbinenturms (13a) montiert wird und auf dem auch die Flügel (18) befestigt werden.

3. Verfahren nach Anspruch 2, das weiter den folgenden Schritt umfasst: nach dem vollständigen Zusammenbau der Windenergiestation wird die einzelne Kammer teilweise belüftet oder eine oder mehrere obere Kammern (im Falle, dass mehrere Kammern existieren) werden vollständig oder teilweise belüftet (oder das in der Kammer (den Kammern) befindliche Wasser wird einfach abgelassen, falls der Wasserstand in diesen Kammern oberhalb des umgebenden Meer- oder Seewasserstands ist) bis die Windenergiestation ihre endgültige Arbeitsposition zur Erzeugung von elektrischer Energie erreicht.

## Revendications

1. Système d'ancrage et d'amarrage de pylônes flottants d'éolienne (13) dans des eaux typiquement plus profondes que 30 mètres, formant une structure de parc éolien, comprenant des ancres (5), des amarres verticales (3), des amarres de bordure (4), des bouées principales (8), un réseau maillé flottant (2) (optionnellement avec des poids (11)) et, typiquement, des bouées de signalisation (12),
chaque pylône d'éolienne comprenant une partie supérieure (13a) exposée aux vents, une partie ou arbre inférieur immergé (13b), et **caractérisé en ce que** chaque pylône d'éolienne comprend des compartiments (15), habituellement un compartiment de centre (15a), un anneau coulissant (14), un poids inférieur de stabilisation (16), un carénage aérodynamique (19) avec de ouvertures (20), un système de canalisation air-eau (21) et des soupapes de raccordement (22).

2. Procédé d'érection des pylônes d'éolienne (13) selon la revendication 1, comprenant
le remorquage des pylônes d'éolienne (13) avec un unique ou plusieurs compartiments en air (15) en position horizontale avec des remorqueurs depuis des sites de construction et d'assemblage à terre jusqu'aux sites de production d'électricité en mer, et
l'érection des pylônes d'éolienne (13) à l'endroit de la destination finale en inondant successivement le compartiment unique (15) ou les compartiments (15), dans le dernier cas en commençant par les compartiments à côté de l'extrémité inférieure respectivement du poids inférieur de stabilisation (16) de l'arbre (13a), jusqu'à ce que la partie supérieure du pylône d'éolienne (13a) atteigne le niveau de travail à partir duquel la nacelle entière est montée sur l'extrémité supérieure du pylône d'éolienne (13a) et à partir duquel les pales (18) également sont fixées.

3. Procédé selon la revendication 2, comprenant en outre l'étape suivante : après avoir complètement assemblé la station électrique éolienne, le compartiment unique est partiellement rempli d'air ou un ou plusieurs compartiments supérieurs (dans le cas où plusieurs compartiments existent) sont totalement ou partiellement remplis d'air (ou l'eau contenue dans le(s) compartiment(s) est simplement relâchée, si le niveau d'eau dans ces compartiments est au-dessus du niveau environnant de la mer ou du lac) jusqu'à ce que la station électrique éolienne atteigne sa position opérationnelle finale pour produire de l'énergie électrique.
